# EUROPEAN PATENT APPLICATION

(11) **EP 3 879 349 A1**
(43) Date of publication of application: **15.09.2021**
(21) Application number: 20203364.3
(22) Date of filing: 22.10.2020
(51) Int. Cl.: G03G 15/00

(54) **IMAGE FORMING APPARATUS, METHOD FOR PERFORMING PRINTING, AND NON-TRANSITORY COMPUTER READABLE MEDIUM**

(30) Priority: 10.03.2020 US 202016814945
(71) Applicant: Toshiba TEC Kabushiki Kaisha, Tokyo 141-8562 (JP)
(72) Inventor: TAKANO, Kuniyoshi, Shinagawa-ku, Tokyo 141-8562 (JP)
(74) Representative: Bandpay & Greuter

(57) **Abstract**

An image forming apparatus includes a printing unit configured to print an image on a sheet, a communication interface configured to communicate with a terminal, and a processor configured to, upon receipt of a request for printing and print data from the terminal via the communication interface, determine whether to perform printing based on whether a specific failure in which printing stops before completion thereof is likely to occur and whether the print data includes confidential information.

## Description

### FIELD

Embodiments described herein relate generally to an image forming apparatus, a method for performing printing by an image forming apparatus, and a non-transitory computer readable medium.

### BACKGROUND

Conventionally, there have been proposed techniques for predicting a failure which may occur in an image forming apparatus, such as a multifunction peripheral (MFP), in advance. With these techniques, it has become possible to predict the failure with a certain degree of accuracy. However, it is still difficult to predict a failure with high accuracy in advance. If a failure occurs in the image forming apparatus during the formation of an image on the sheet, the image forming apparatus may stop processing while the sheet on which the image has been formed is still located within the apparatus. In such a case, there is a possibility that the sheet on which the image is formed may be taken by another person. When the image formed on the sheet is confidential information, there is a possibility that confidential information may be obtained by a third party.

### BRIEF DESCRIPTION OF THE DRAWINGS

FIG. 1 is a diagram illustrating a configuration of an image forming system according to an embodiment.
FIG. 2 is a hardware block diagram of the image forming apparatus according to the embodiment.
FIG. 3 is a diagram illustrating a failure condition table according to the embodiment.
FIG. 4 is a hardware block diagram of a terminal according to the embodiment.
FIG. 5 is a hardware block diagram of a server according to the embodiment.
FIGS. 6 and 7 are diagrams illustrating a first example of a flow of an image forming process performed by the image forming system.
FIG. 8 is a diagram illustrating a second example of the flow of the image forming process performed by the image forming system.
FIG. 9 is a diagram illustrating a third example of the flow of the image forming process performed by the image forming system.
FIG. 10 is a diagram illustrating a fourth example of the flow of the image forming process performed by the image forming system.
FIG. 11 is a diagram illustrating a fifth example of the flow of the image forming process performed by the image forming system.
FIG. 12 is a diagram illustrating a fifth example of the flow of the image forming process performed by the image forming system.
FIG. 13 is a diagram illustrating a sixth example of the flow of the image forming process performed by the image forming system.
FIG. 14 is a diagram illustrating a sixth example of the flow of the image forming process performed by the image forming system.
FIG. 15 is a diagram illustrating a user information table according to the embodiment.
FIG. 16 is a diagram illustrating the flow of the image forming process performed by the image forming system according to a modification example.

### DETAILED DESCRIPTION

In one embodiment, an image forming apparatus includes a printing unit configured to print an image on a sheet, a communication interface configured to communicate with a terminal, and a processor configured to, upon receipt of a request for printing and print data from the terminal via the communication interface, determine whether to perform printing based on whether a specific failure in which printing stops before completion thereof is likely to occur and whether the print data includes confidential information.

Preferably, the processor is configured to determine not to perform the printing when the specific failure is likely to occur and the print data includes confidential information.

Preferably, the processor is configured to determine to perform the printing when either the specific failure is not likely to occur or the print data does not include confidential information.

Preferably, the processor is configured to, after determining not to perform the printing, control the communication interface to transmit to the terminal a signal indicating that printing is interrupted.

Preferably, the processor is configured to, after transmitting the signal, perform the printing upon receipt of a signal from the terminal indicating the printing is to be resumed.

Preferably, the processor is configured to determine whether the specific failure is likely to occur based on a condition of the image forming apparatus.

Preferably, the image forming apparatus further comprises a sensor, wherein the processor is configured to determine the condition based on an output signal from the sensor.

Preferably, the processor is configured to determine that the print data includes confidential information if a predetermined image or a predetermined character string is included in the print data.

Preferably, the processor is further configured to determine to perform the printing based on whether a user who has issued the request for printing is an administrator.

There is also provided a method for performing printing with an image forming apparatus, the method comprising:
receiving a request for printing and print data from a terminal; and
determining whether to perform the printing based on whether a specific failure in which printing stops before completion thereof is likely to occur and whether the print data includes confidential information.

Preferably, printing is determined not to be performed when the specific failure is likely to occur and the print data includes confidential information.

Preferably, printing is determined to be performed when either the specific failure is not likely to occur or the print data does not include confidential information.

Preferably, the method further comprises, after the printing is determined not to be performed, transmitting a signal to the terminal indicating that printing is interrupted.

Preferably, whether the print data includes confidential information is determined based on whether a predetermined image or a predetermined character string is included in the print data.

There is also provided a non-transitory computer readable medium storing a program for causing a computer to perform the aforementioned method.

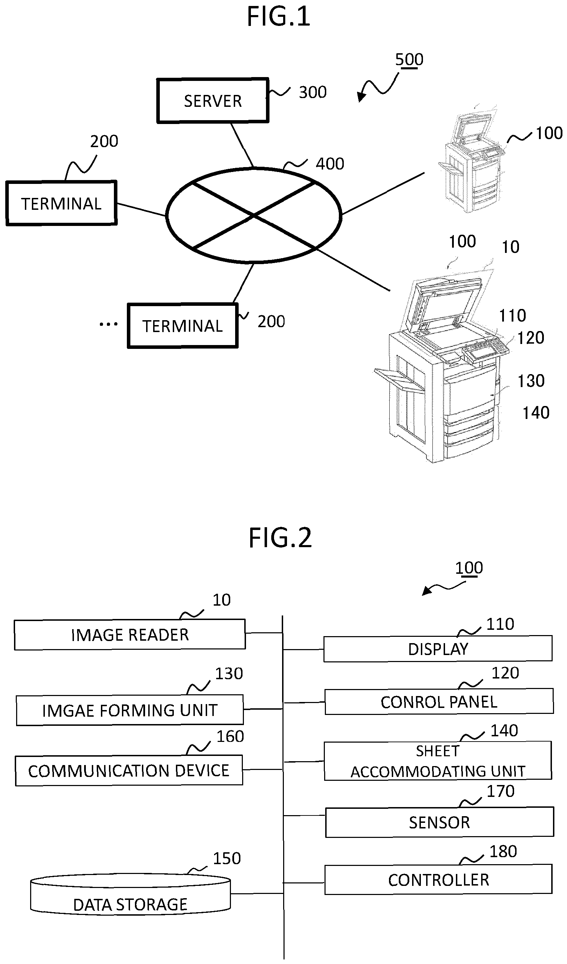

Hereinafter, an image forming apparatus, a method for performing printing by an image forming apparatus, and a non-transitory computer readable medium according to embodiments will be described with reference to the drawings. FIG. 1 is a diagram showing a configuration of an image forming system according to an embodiment. The image forming system 500 includes one or more image forming apparatuses 100, one or more terminals 200, and a server 300. The image forming apparatus 100 is an apparatus for forming an image on a sheet. The image forming apparatus 100 is, for example, a multifunction peripheral. The terminal 200 is an information processing apparatus that transmits a request for image formation to one of the image forming apparatuses 100. The server 300 is configured to communicate with the image forming apparatus 100 and the terminal 200 via a network 400. Hereinafter, the respective apparatuses will be described in detail.

FIG. 2 is a hardware block diagram of the image forming apparatus 100 according to an embodiment. First, the image forming apparatus 100 will be described in detail with reference to FIGS. 1 and 2. The image forming apparatus 100 includes an image reader 10, a display 110, a control panel 120, an image forming unit 130, a sheet accommodating unit 140, a data storage 150, a communication device 160, a sensor 170, and a controller 180.

The image forming apparatus 100 forms an image on a sheet by using a developer such as toner or ink. When the developer is toner, the developer is heated to be fixed on the sheet. When the developer is ink, the developer is dropped onto the sheet to form an image on the sheet. The sheet may be, for example, paper or label paper. The sheet may be any material having a surface on which an image can be formed by the image forming apparatus 100.

The image reader 10 optically reads image information from a sheet as light and dark signals. The image reader 10 records the read image information. The recorded image information may be transmitted to another information processing apparatus via the network 400. The recorded image information may be printed on a sheet by the image forming unit 130.

The display 110 is an image display device such as a liquid crystal display (LCD), an organic EL (Electro Luminescence) display, or the like. The display 110 displays various information regarding the image forming apparatus 100.

The image forming unit 130 forms an image on a sheet based on image information generated by the image reader 10 or image information received via the network 400. The image forming unit 130 includes, for example, a photoconductor drum, an exposure device, a development device, a transfer device, and a fixing device. A sheet conveyance path for the sheet is formed inside the image forming unit 130. The sheet to be processed is conveyed by a roller provided along the conveyance path. An image is formed on the sheet during conveyance.

The image forming unit 130 forms an image by, for example, the following processing. The exposure device of image forming unit 130 forms an electrostatic latent image on the photoconductor drum based on the image information. The development device of image forming unit 130 forms a visible image on the photoconductor drum by attaching a developer to the electrostatic latent image.

The transfer unit of image forming unit 130 transfers a visible image onto a sheet. The fixing device of the image forming unit 130 fixes the visible image onto the sheet by applying heat and pressure to the sheet. The sheet on which the image is formed may be a sheet stored in the sheet accommodating unit 140 or a manually inserted sheet.

The sheet accommodating unit 140 accommodates a sheet used for image formation in the image forming unit 130, and conveys the sheet to the image forming unit 130 by means of a conveying roller.

The data storage 150 is a storage device such as a magnetic hard disk device or a semiconductor memory device. The data storage 150 stores data necessary for the image forming apparatus 100 to operate. The data storage 150 may temporarily store data of the image to be formed on a sheet.

The data storage 150 stores data relating to a failure condition for determining whether the possibility of a failure is higher than or equal to a predetermined value in the image forming apparatus 100. For example, the data relating to the failure condition is a learned model obtained by performing machine learning using a plurality of teacher data in advance. In this case, a failure condition is that the possibility of a failure is determined to be higher than or equal to a predetermined value on the basis of the learned model. Alternatively, the data related to the failure condition can be contained in a failure condition table or the like stored in data storage 150. The data storage 150 may also store conditions for determining whether or not confidential information is contained in data to be printed by the image forming apparatus 100. Another example of the failure condition is whether a specific failure occurs a predetermined number of times within a predetermined period of time. Another failure condition may be a condition related to the remaining service life of equipment included in the image forming unit 130 being short. Hereinafter, the failure condition table and a confidential information indicating condition will be described.

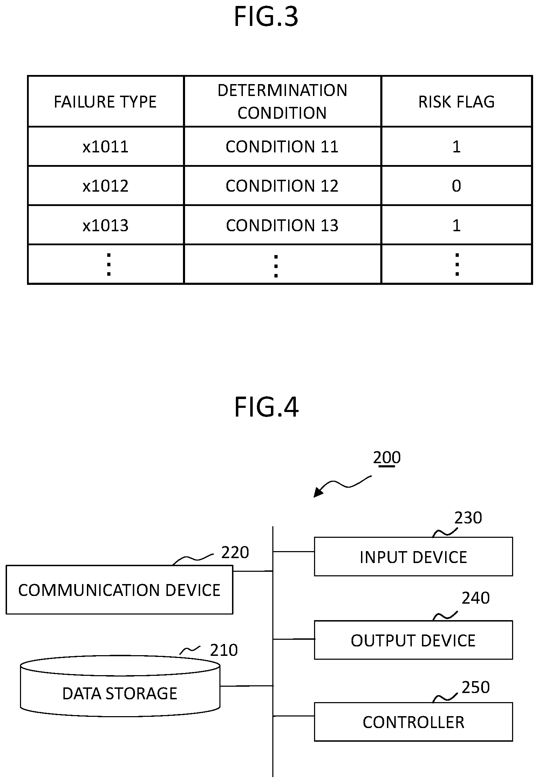

FIG. 3 is a diagram illustrating an example of the failure condition table. The failure condition table is a table indicating a condition for predicting a possible failure occurring in the image forming unit 130 of the image forming apparatus 100, for example. The failure condition table includes a plurality of failure condition records. The failure condition record has, for example, a failure type, a determination condition, and a risk flag.

The failure type is a value that indicates the type of failure that may occur in the image forming apparatus 100. The failure type may be, for example, identification information indicative of the sensor 170 of the image forming apparatus 100. That is, the type of failure may be indicated based on which sensor 170 has detected a failure. The determination condition indicates the condition for the set of values detected by the sensors 170 of the image forming apparatus 100. When the condition indicated by the determination condition is satisfied, the possibility of a failure indicated in the failure type of the same failure condition record is higher than or equal to a predetermined value. The determination condition may indicate, for example, a threshold value of a value indicated by the sensor 170 immediately before a failure.

The risk flag is a value indicating whether or not the sheet on which part or all of the image has been formed remains within the range of image forming apparatus 100. Such a failure will be referred to as "specific failure" hereinafter. For example, when the value of the risk flag is "1", the possibility that specific failure occurs is higher than or equal to a predetermined value. For example, when the value of the risk flag is "0", the possibility that specific failure occurs is lower than the predetermined value. For example, the failure condition record in the uppermost stage in FIG. 3 indicates that when the sensor 170 of "x1011" indicates a value satisfying the condition of "condition 11", the possibility that "specific failure" occurs is higher than or equal to the predetermined value.

The confidential condition is a condition used for determining whether or not information included in data transmitted from the terminal 200 to the image forming apparatus 100 to be printed is confidential information. When the condition indicated by the confidential condition is satisfied, it is determined that confidential information is contained in the data. For example, it may be a confidential condition that a predetermined watermark is included. For example, it may be a confidential condition that a specific image (e.g., an image reading "CONFIDENTIAL") indicating that the data is confidential is included. For example, it may be a confidential condition that the file name of the data includes a specific string (for example, "CONFIDENTIAL") indicating that the file is confidential. In general, the confidential condition may be any condition as long as it can be utilized to determine whether or not the data is likely to include confidential information.

The communication device 160 is a communication interface for the image forming apparatus 100 to communicate with other devices (e.g., the terminal 200, the server 300) via the network 400.

The sensor 170 is provided for each of the image reader 10, the image forming unit 130, and the sheet accommodating unit 140. One or more sensors 170 may be provided in the image forming unit 130. However, in order to detect potential failures with higher accuracy, it is desirable to provide two or more sensors 170 in the image forming apparatus 100. The sensor 170 detects a value indicating a state or environment of the image forming unit 130. Any type of sensor may be used for detecting such a value. For example, the sensor 170 may be a sensor for detecting ambient temperature or humidity in the image forming apparatus 100. The sensor 170 may be, for example, a sensor that detects a value relating to the rotation of a motor or a roller (e.g., rotational frequency, rotational speed, torque). For example, the sensor 170 may be a sensor for detecting the conveyance speed of the sheet. The sensor 170 may be a sensor that detects a current value or a voltage value flowing through or applied to a circuit of one of the charger, the development device, the transfer device, and the fixing device.

The controller 180 includes a processor such as a Central Processing Unit (CPU) and a memory. The controller 180 reads out and executes a program stored in the data storage 150 in advance. The controller 180 controls the operation of each device included in the image forming apparatus 100. The controller 180 obtains a value detected by each sensor 170, for example, and performs a failure prediction. The controller 180 may transmit information on a failure prediction based on a value detected by each sensor 170 or a detection result to the terminal 200 or the server 300 via the communication device 160. When the controller 180 receives an image forming request from the terminal 200, it may control its own apparatus to form an image corresponding to the received image forming request on the sheet.

FIG. 4 is a hardware block diagram of the terminal 200. Next, the terminal 200 will be described in detail. The terminal 200 includes a data storage 210, a communication device 220, an input device 230, an output device 240, and a controller 250.

The data storage 210 is a storage device such as a magnetic hard disk device or a semiconductor memory device. The data storage 210 stores data that is needed when the terminal 200 operates. The data storage 210 stores, for example, a failure condition. The data storage 210 stores conditions for determining whether or not confidential information is included in data to be printed by the image forming apparatus 100.

The communication device 220 is a communication interface for the terminal 200 to communicate with other devices (e.g., the image forming apparatus 100 and the server 300) via the network 400.

The input device 230 is an input device, such as a keyboard, a pointing device (e.g., a mouse, a tablet, or the like), a button, and a touch panel. The input device 230 is operated by the user for inputting the user's instruction to the terminal 200. The input device 230 may be an interface for connecting an input device to terminal 200. In this case, the input device 230 inputs an input signal, which is generated according to the input of the user at the input device, to the terminal 200. The input device 230 may be a microphone and a voice recognition device. In this case, the input device 230 recognizes speech spoken by the user, and inputs character string information of the recognition result to the terminal 200. The input device 230 may be configured in any manner as long as the user can input the user's instruction to the terminal 200.

The output device 240 is an output device for outputting an image or a character on a screen, such as a cathode ray tube (CRT), a liquid crystal display, and an organic EL (electro-luminescence) display. The output device may be a device for converting characters to sound and outputting the sound. In this case, the output device may be a speech synthesizer and a speech output device (e.g., speaker). The output device 240 may be an interface for connecting the output device to the terminal 200.

The controller 250 includes a processor such as a CPU and a memory. The controller 250 reads out and executes a program stored in the data storage 210 in advance. The controller 250 controls the operation of each device included in the terminal 200. When the data storage 210 stores the learned model, the controller 250 performs the inference process based on the learned model based on the machine learning algorithm.

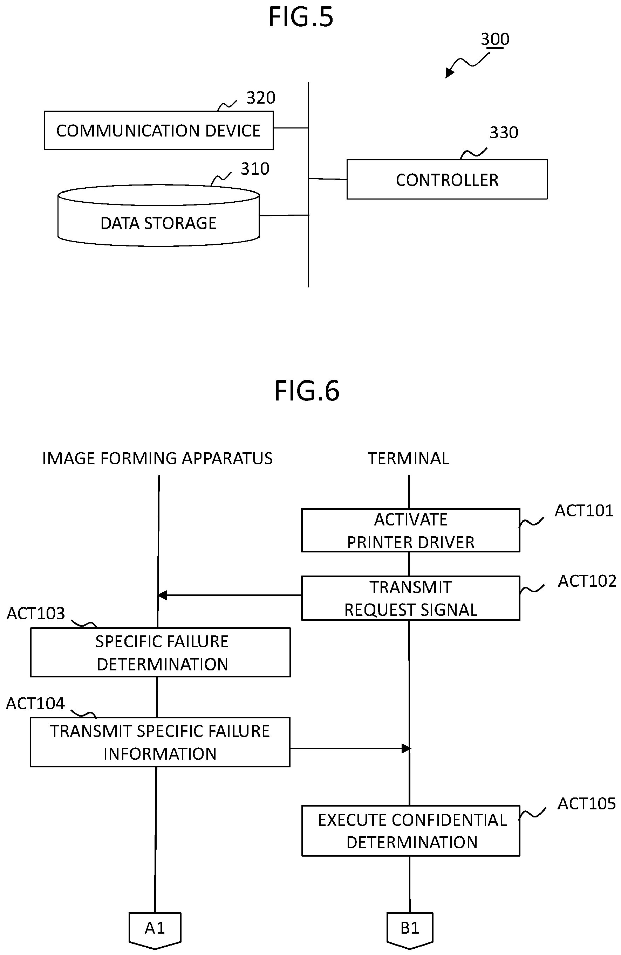

FIG. 5 is a hardware block diagram of the server 300. Next, details of the server 300 will be described. The server 300 includes a data storage 310, a communication device 320, and a controller 330.

The data storage 310 is a storage device such as a magnetic hard disk device or a semiconductor memory device. The data storage 310 stores data that is required when the server 300 operates. The data storage 310 stores, for example, a failure condition. The data storage 310 stores conditions for determining whether or not confidential information is included in data to be printed by the image forming apparatus 100.

The communication device 320 is a communication interface for the server 300 to communicate with other devices (e.g., the image forming apparatus 100 or the terminal 200) via the network 400.

The controller 330 includes a processor such as a CPU and a memory. The controller 330 reads out and executes a program stored in the data storage 310 in advance. The controller 330 controls the operations of the respective devices included in the server 300. When the data storage 310 stores the learned model, the controller 330 performs the inference process based on the learned model based on the machine learning algorithm.

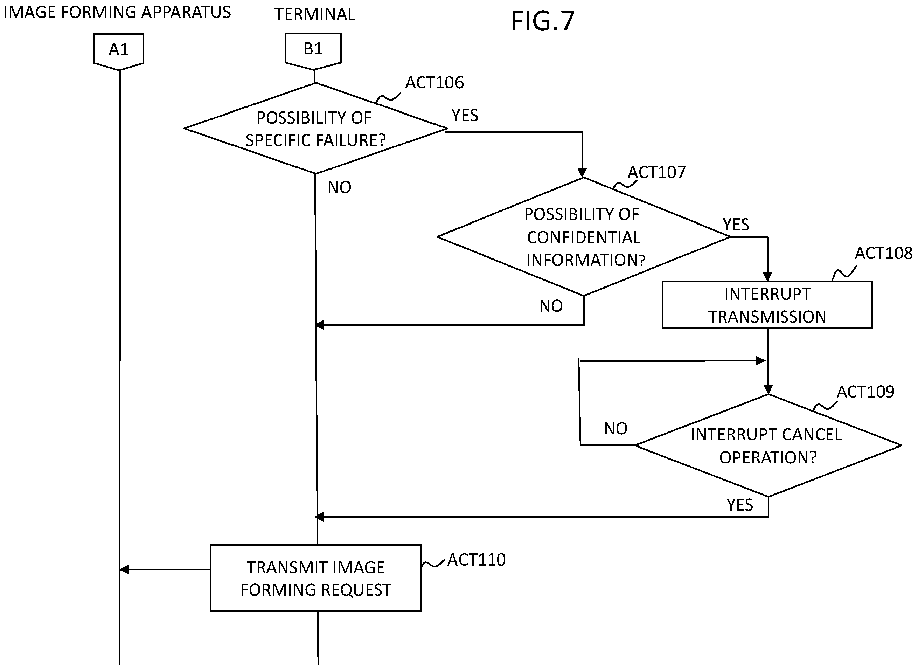

FIGS. 6 and 7 are diagrams illustrating a first example of the flow of the image forming process performed by the image forming system 500. In the first example, a specific failure determination is performed in the image forming apparatus 100. First, the user operates the input device 230 of the terminal 200 to perform an operation for image formation for the image forming apparatus 100. In response to this operation, the controller 250 activates a printer driver installed in the terminal 200 in advance (ACT 101). In accordance with the operation of the printer driver, the controller 250 transmits a request signal for specific failure information to the image forming apparatus 100 (ACT 102). The specific failure information is information indicating the result of determining the possibility of specific failure based on the detection information of the sensor 170. When the controller 180 of the image forming apparatus 100 receives the request signal, it determines the possibility of a specific failure based on the value output from each of the sensors 170 (ACT 103). A specific example of the specific failure determination will be described below. The controller 180 determines whether the acquired sensor information satisfies the determination condition of the failure condition table or not, for each failure type. If there is a failure type in which the determination condition is satisfied, the controller 180 obtains the risk flag of the failure type. When the value of "1" is included in the acquired risk flag, the controller 180 determines that the specific failure may be higher than or equal to a predetermined value.

After the specific failure determination process, the controller 180 transmits the specific failure information to the terminal 200 (ACT 104).

When the controller 250 of the terminal 200 receives the specific failure information, it executes the confidential determination (ACT 105). A specific example of the confidential determination will be described below. The controller 250 determines whether or not the data which is prepared for image formation by the user (i.e., image formation target data) satisfies the confidential condition. When the confidential condition is satisfied, the controller 250 determines that the possibility that the data to be printed includes confidential information is higher than or equal to some predetermined value. If the confidential condition is not satisfied, the controller 250 determines that the possibility is lower than the predetermined value.

Now referring to FIG. 7, when the possibility of specific failure is higher than or equal to the predetermined value and the possibility that the data to be printed contains confidential information is higher than or equal to the predetermined value (ACT 106 - YES; ACT 107 - YES), the controller 250 interrupts the process of transmitting image information to the image forming apparatus 100 (ACT 108). When the transmission processing of the image information is interrupted, the controller 250 outputs information that the transmission process is interrupted via the output device 240. At this time, the controller 250 may further output a reason for the interruption of the transmission process.

Thereafter, the controller 250 monitors whether or not the interrupt cancel operation has been performed (ACT 109). The interrupt cancel operation is an operation for canceling the interruption and continuing with the transmission processing of the image information. The interrupt cancel operation may be, for example, an operation in which a button for releasing the interruption displayed on the screen is pressed by via the input device 230. When the interrupt cancel operation is performed (ACT 109 - YES), the process of ACT 110 (i.e., transmission of the image forming request) is performed.

When the possibility of specific failure is lower than the predetermined value, or when the possibility that the data to be printed includes confidential information is lower than the predetermined value (ACT 106 - NO; ACT 107 - NO), the controller 250 transmits an image forming request to the image forming apparatus 100 (ACT 110). The image formation request includes a command for instructing image formation and data to be printed.

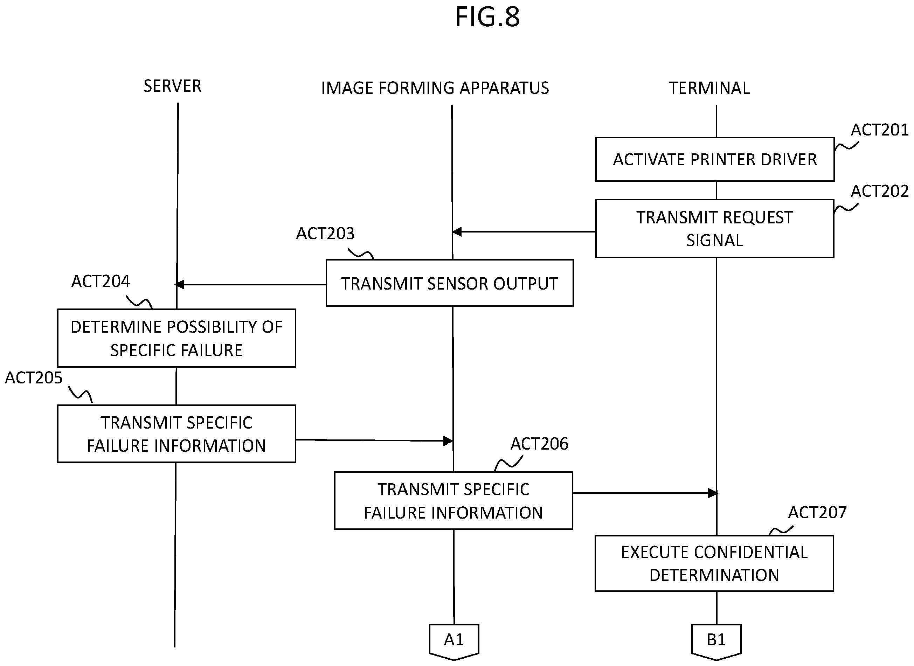

FIG. 8 is a diagram illustrating a second example of the flow of the image forming process performed by the image forming system 500. In the second example, a specific failure determination is performed by the server 300. First, the user operates input device 230 of the terminal 200 to perform an operation for image formation for the image forming apparatus 100. In response to this operation, the controller 250 activates the printer driver installed in the terminal 200 in advance (ACT 201). In accordance with the operation of the printer driver, the controller 250 transmits the request signal of the specific failure information to the image forming apparatus 100 (ACT 202). When the controller 180 of the image forming apparatus 100 receives the request signal of the specific failure information, it transmits a value output from each of the sensors 170 to the server 300 (ACT 203).

When the controller 330 of the server 300 receives the value of each sensor 170 from the image forming apparatus 100, it determines the possibility of a specific failure based on each received value (ACT 204). After the specific failure determination process, the controller 330 transmits the specific failure information to the image forming apparatus 100 (ACT 205). The controller 180 of the image forming apparatus 100 transmits the received specific failure information to the terminal 200 (ACT 206). When the controller 250 of the terminal 200 receives the specific failure information, it executes the confidential determination (ACT 207). After the process of ACT 207, the process shown in FIG. 7 is executed.

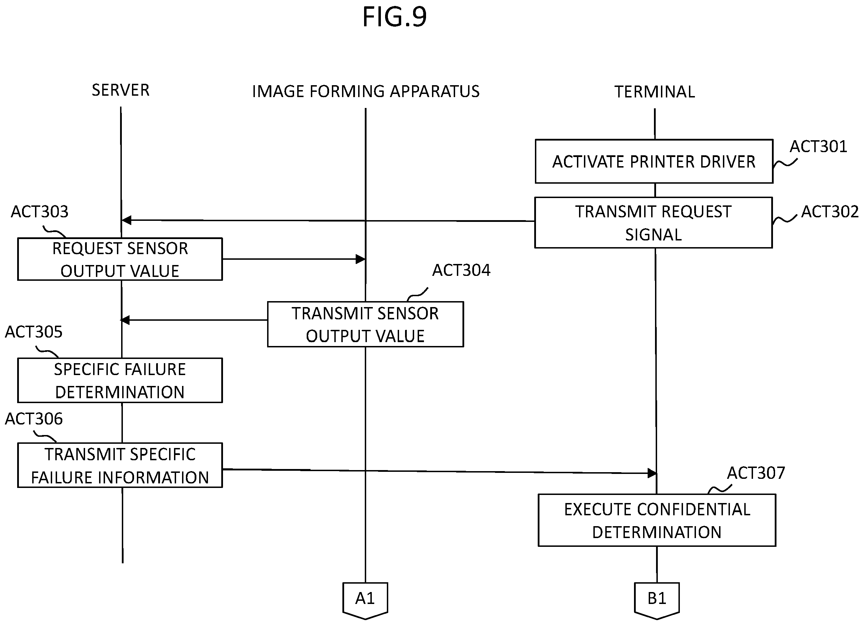

FIG. 9 is a diagram illustrating a third example of the flow of the image forming process performed by the image forming system 500. In the third example, a specific failure determination is performed by the server 300. First, the user operates input device 230 of terminal 200 to perform an operation for image formation for the image forming apparatus 100. In response to this operation, the controller 250 activates the printer driver installed in the terminal 200 in advance (ACT 301). The controller 250 transmits the request signal of the specific failure information to the server 300 in accordance with the operation of the printer driver (ACT 302). Upon receiving the request signal of the specific failure information, the controller 330 of the server 300 transmits the request signal of the output value of the sensor 170 to the image forming apparatus 100 (ACT 303). When the controller 180 of the image forming apparatus 100 receives the request signal of the sensor output value, it transmits the value output from each sensor 170 to the server 300 (ACT 304).

When the controller 330 of the server 300 receives the value of each sensor 170 from the image forming apparatus 100, it determines the possibility of a specific failure based on each received value (ACT 305). After the specific failure determination process, the controller 330 transmits the specific failure information to the information terminal 200 (ACT 306). When the controller 250 of the terminal 200 receives the specific failure information, it executes the confidential determination (ACT 307). After the process of ACT 307, the process shown in FIG. 7 is executed.

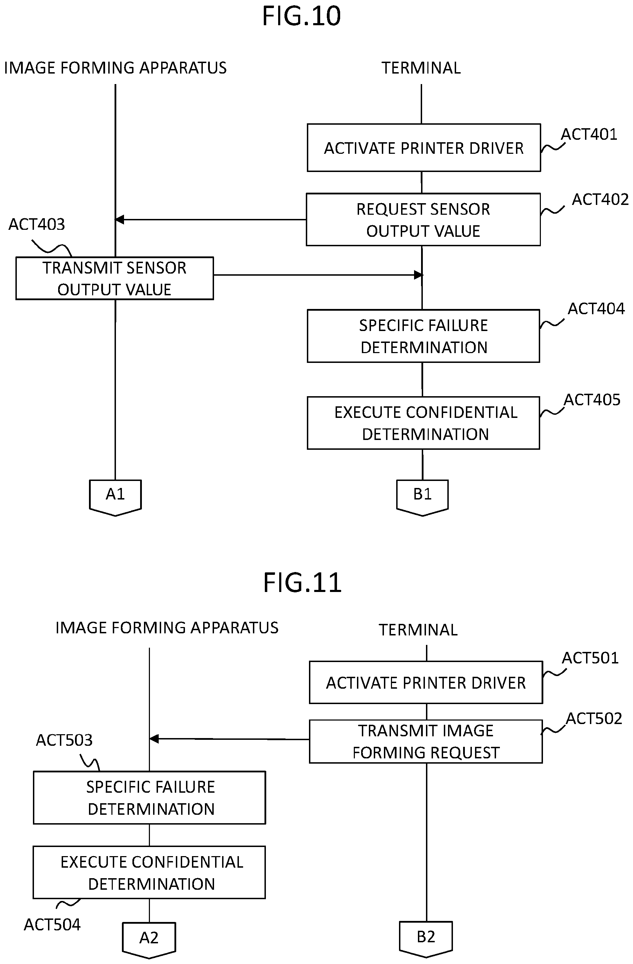

FIG. 10 is a diagram illustrating a fourth example of the flow of the image forming process performed by the image forming system 500. In the fourth example, a specific failure determination is performed by the terminal 200. First, the user operates input device 230 of the terminal 200 to perform an operation for image formation for the image forming apparatus 100. In response to this operation, the controller 250 activates the printer driver installed in the terminal 200 in advance (ACT 401). In accordance with the operation of the printer driver, the controller 250 transmits a request signal of the output value of the sensor 170 to the image forming apparatus 100 (ACT 402). When the controller 180 of the image forming apparatus 100 receives the request signal of the sensor output value, it transmits the value output from each of the sensors 170 to the terminal 200 (ACT 403). When the controller 250 of the terminal 200 receives the values of the respective sensors 170 from the image forming apparatus 100, it determines the possibility of specific failure based on the received values (ACT 404). After the specific failure determination process, the controller 250 executes a confidential determination (ACT 405). After the process of ACT 405, the process shown in FIG. 7 is executed.

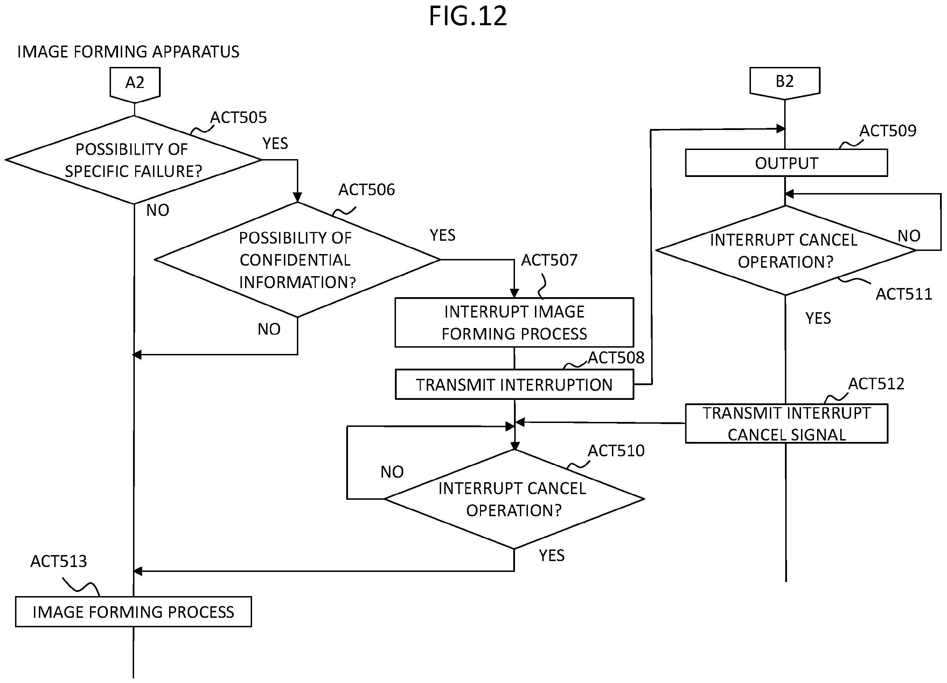

FIGS. 11 and 12 are diagrams illustrating a fifth example of the flow of the image forming process performed by the image forming system 500. In the fifth example, a specific failure determination and a confidential determination are performed by the image forming apparatus 100. First, the user operates input device 230 of the terminal 200 to perform an operation for image formation for the image forming apparatus 100. In response to this operation, the controller 250 activates the printer driver installed in the terminal 200 in advance (ACT 501). The controller 250 transmits an image forming request to the image forming apparatus 100 in response to the user's operation (ACT 502). The image formation request includes a command for instructing image formation and data to be printed.

When the image forming apparatus 100 receives the image forming request, the controller 180 determines the possibility of specific failure based on the value output from each of the sensors 170 (ACT 503). After the specific failure determination process, the controller 180 executes confidential determination based on the information received in the image formation request and the file to be printed (ACT 504).

Referring to FIG. 12, when the possibility of specific failure is higher than or equal to the predetermined value and the possibility that the data to be printed includes confidential information is higher than or equal to a predetermined value (ACT 505 - YES, ACT 506 - YES), the controller 180 interrupts the image forming process (ACT 507). When the image forming process is interrupted, the controller 180 transmits an instruction to interrupt an image formation process to the terminal 200 (ACT 508). When the controller 250 of the terminal 200 receives the instruction for the interruption of the image forming process, it outputs information about the interruption of the image forming process for the user via the output device 240 (ACT 509). At this time, the controller 250 may further output the reason why the image forming process is interrupted.

Thereafter, the controller 180 of the image forming apparatus 100 monitors whether or not the interrupt cancel operation has been performed (ACT 510). The interrupt cancel operation is an operation for releasing the interruption and continuing the image forming process. The interrupt cancel operation may be, for example, a predetermined operation on the control panel 120 of the image forming apparatus 100. The interrupt cancel operation may be an operation in which a button for releasing the interruption displayed on the screen of the terminal 200 is pressed by the input device 230. When the interrupt cancel operation is performed at the terminal 200 (ACT 511 - YES), the controller 250 transmits an interrupt cancel signal to the image forming apparatus 100 (ACT 512). When such an interrupt cancel operation is performed (ACT 510 - YES), the process of ACT 513 (i.e., image forming process) to be described later is performed.

When the possibility of specific failure is lower than the predetermined value, or when the possibility that the data to be printed includes confidential information is lower than the predetermined value (ACT 505 - NO, ACT 506 - NO), the controller 180 executes the image forming process (ACT 513).

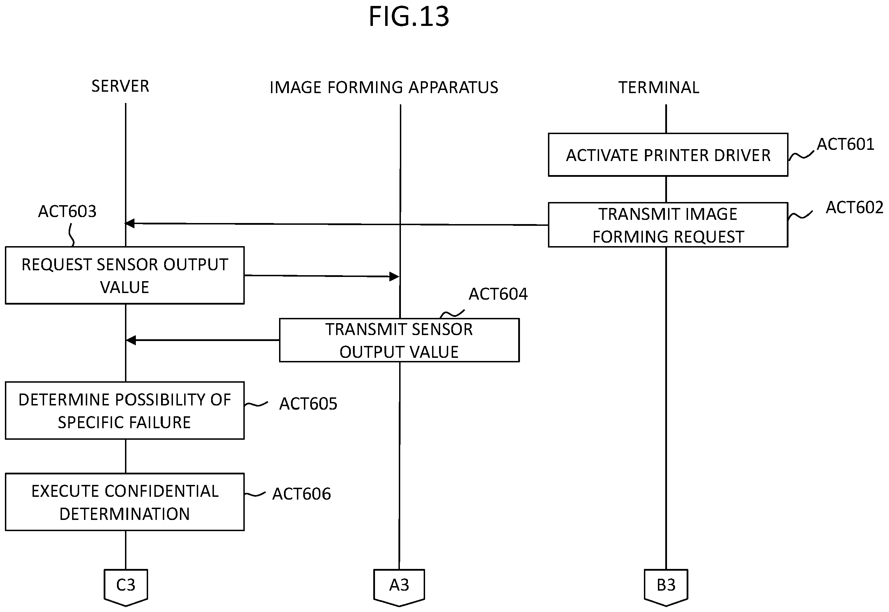

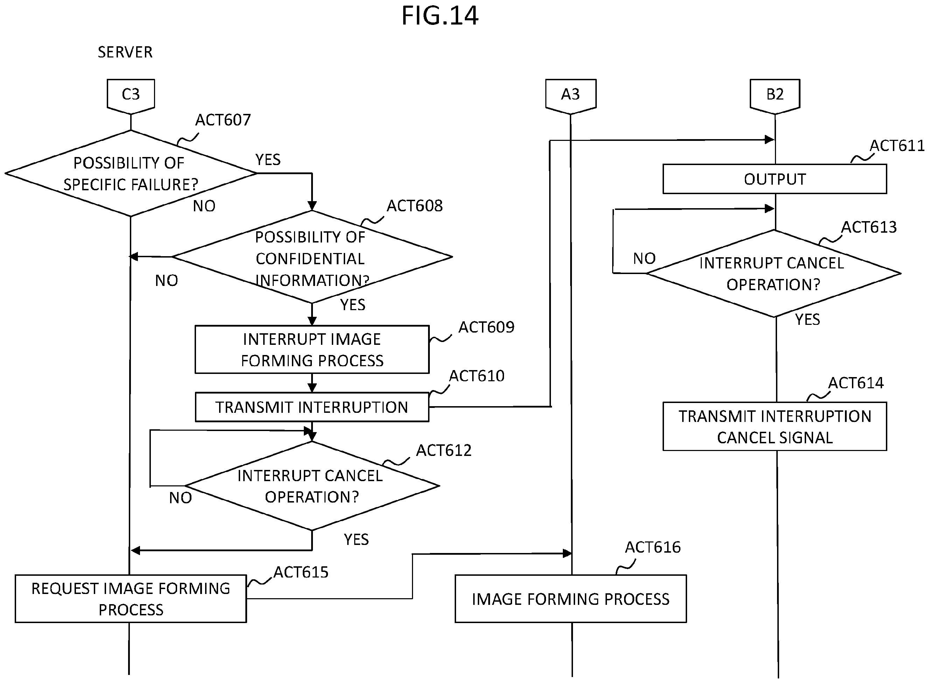

FIGS. 13 and 14 are diagrams illustrating a sixth example of the flow of the image forming process performed by the image forming system 500. In the sixth example, a specific failure determination and a confidential determination are performed by the server 300. First, the user operates the input device 230 of the terminal 200 to perform an operation for image formation for the image forming apparatus 100. In response to this operation, the controller 250 activates the printer driver installed in the terminal 200 in advance (ACT 601). The controller 250 transmits an image formation request to the server 300 in response to the user's operation (ACT 602). The image formation request includes a command for instructing image formation and data to be printed.

Upon receiving the image forming request, the controller 330 of the server 300 transmits the request signal of the output value of the sensor 170 to the image forming apparatus 100 (ACT 603). When the controller 180 of the image forming apparatus 100 receives the request signal of the sensor output value, it transmits the value output from each sensor 170 to the server 300 (ACT 604).

The controller 330 of the server 300 determines the possibility of the specific failure based on the values output from the sensors 170 (ACT 605). After the specific failure determination process, the controller 330 executes confidential determination based on the information received in the image formation request and the file to be printed (ACT 606).

Referring to FIG. 14, when the possibility of specific failure is higher than or equal to the predetermined value and the possibility that the data to be printed includes confidential information is higher than or equal to the predetermined value (ACT 607 - YES, ACT 608 - YES), the controller 330 interrupts the image forming process (ACT 609). When the image forming process is interrupted, the controller 330 transmits information about the interruption of the image formation process to the terminal 200 (ACT 610). When the controller 250 of the terminal 200 receives the information about the interruption of the image forming process, it outputs information indicating that the image forming process is interrupted for the user via the output device 240 (ACT 611). At this time, the controller 250 may further output the reason why the image forming process is interrupted.

Thereafter, the controller 330 of the server 300 monitors whether or not the interrupt cancel operation has been performed (ACT 612). The interrupt cancel operation is an operation for releasing the interruption and continuing the image forming process. The interrupt cancel operation may be an operation in which a button for releasing the interruption displayed on the screen of the terminal 200 is pressed by the input device 230. When the interrupt cancel operation is performed at the terminal 200 (ACT 613 - YES), the controller 250 transmits an interrupt cancel signal to the server 300 (ACT 614). When the interrupt cancel operation is performed (ACT 612 - YES), a process of ACT 615 (i.e., image formation processing request) to be described later is performed.

When the possibility of specific failure is lower than the predetermined value or when the possibility that the data to be printed includes confidential information is lower than the predetermined value (ACT 607 - NO, ACT 608 - NO), the controller 330 transmits an image forming processing request to the image forming apparatus 100 (ACT 615). When the image forming apparatus 100 receives the image forming processing request, the controller 180 performs image forming processing in response to the received image forming request (ACT 616).

Note that all or part of the operations of the controller 180, the controller 250, and the controller 330 may be performed by hardware such as an ASIC (Application Specific Integrated Circuit), a PLD (Programmable Logic Device), or an FPGA (Field Programmable Gate Array). The program may be recorded on a computer-readable recording medium. The computer-readable recording medium is, for example, a flexible disk, a magneto-optical disk, a portable medium such as a ROM, a CD-ROM, or a storage device such as a hard disk incorporated in a computer system. The program may be transmitted over a telecommunications line.

According to at least one embodiment described above, when there is a high possibility of specific failure and there is a high possibility that the data to be printed includes confidential information, the image forming process is not executed. Specifically, the transmission process of image information from the terminal 200 or the server 300 to the image forming apparatus 100 is interrupted. In addition, in the image forming apparatus 100, the image forming process for the received image information is interrupted. As described above, a specific failure is a failure in which a sheet on which a part or all of an image is formed remains within the image forming apparatus 100 without being discharged. By performing such processing, it is possible to prevent a part or all of the confidential information from remaining in the image forming apparatus 100 due to a failure. Therefore, it is possible to reduce the possibility that confidential information may be obtained by a third party.

In the image forming system 500, even if the image forming process is interrupted, the image forming process is continued when the user performs the interrupt cancel operation. Therefore, the user can resume the image forming process after recognizing the occurrence of the risk. Therefore, even when there is a risk, image formation can be performed more smoothly.

### (Modified Example)

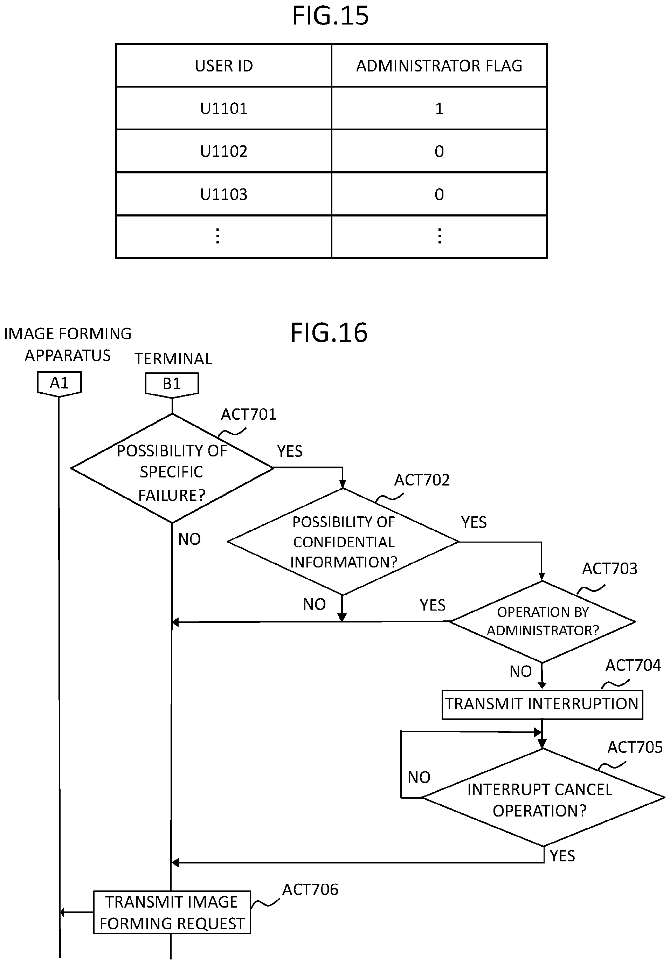

The data storage 210 may further store a user information table. FIG. 15 is a diagram showing such a user information table. The user information table includes a plurality of user information. The user information has a user ID and an administrator flag value. The user ID is the identification information of the user who may use the image forming apparatus 100. The administrator flag indicates whether or not the user is an administrator, that is, a person who has a predetermined authority to the image forming apparatus. For example, when the value of the administrator flag is "1", it indicates that the user is an administrator. For example, when the value of the administrator flag is "0", it indicates that the user is not an administrator. The administrator is a person who can perform repair work such as taking out sheets remaining inside the image forming unit 130 by operating the image forming unit 100 when a failure occurs in the image forming apparatus 100.

The controller 250 in the modification determines whether or not the user of the own apparatus is an administrator. The controller 250 determines whether or not the user of the own apparatus is an administrator based on the user ID input in logging in to the own apparatus and the user information table.

FIG. 16 is a diagram illustrating the flow of the image forming processing performed by the image forming system 500 according to the modification. Since the processing before the execution of FIG. 16 is the same as that of FIG. 6, the illustration and description thereof are omitted. After ACT 105, when the possibility of specific failure is higher than or equal to the predetermined value (ACT 701 - YES), the possibility that data to be printed includes confidential information is higher than or equal to the predetermined value (ACT 702 - YES), and the user of terminal 200 is not an administrator (ACT 703 - NO), the controller 250 interrupts the transmission processing of image information (ACT 704). When the transmission processing is interrupted, the controller 250 outputs information that the transmission process is interrupted via the output device 240. At this time, the controller 250 may further output the reason for the interruption of the transmission process.

Thereafter, the controller 250 monitors whether or not the interrupt cancel operation has been performed (ACT 705). The interrupt cancel operation is an operation for canceling the interruption and continuing with the transmission processing of the image information. The interrupt cancel operation may be, for example, an operation in which a button for releasing the interruption displayed on the screen is pressed by via the input device 230. When the interrupt cancel operation is performed (ACT 705 - YES), the process of ACT 706 (i.e., transmission of the image forming request) is performed.

When the possibility of specific failure is lower than the predetermined value (ACT 701 - NO), the possibility that the data to be printed includes confidential information is lower than the predetermined value (ACT 702 - NO), or the user of terminal 200 is an administrator (ACT 703 - YES), the controller 250 transmits an image forming request to the image forming apparatus 100 (ACT 706). The image formation request includes a command for instructing image formation and data to be printed. The processing according to the modification shown in FIG. 16 may be applied in the other examples (i.e., the second example to the sixth example).

In the modification of the image forming system 500 configured as described above, even when the possibility of specific failure is high and the data to be printed is highly likely to contain confidential information, the transmission processing of image information is not interrupted when the user of the terminal 200 is an administrator. This is because the administrator may be expected to remove the sheet from within the image forming apparatus 100, even if a specific failure has occurred in the image forming apparatus 100. That is, even if the sheet on which the confidential information has been formed remains within the image forming apparatus 100 due to a specific failure, a user who is an administrator can remove the sheet by himself/herself. Therefore, even if confidential information is being formed on the sheet, there is a very low possibility that confidential information will be obtained by a third party. In such a case, image formation can be performed more smoothly by performing image formation without performing interruption processing.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An image forming apparatus comprising:
a printing unit configured to print an image on a sheet;
a communication interface configured to communicate with a terminal; and
a processor configured to, upon receipt of a request for printing and print data from the terminal via the communication interface, determine whether to perform printing based on whether a specific failure in which printing stops before completion thereof is likely to occur and whether the print data includes confidential information.

2. The image forming apparatus according to claim 1, wherein the processor is configured to determine not to perform the printing when the specific failure is likely to occur and the print data includes confidential information.

3. The image forming apparatus according to claim 2, wherein the processor is configured to determine to perform the printing when either the specific failure is not likely to occur or the print data does not include confidential information.

4. The image forming apparatus according to claim 2 or 3, wherein the processor is configured to, after determining not to perform the printing, control the communication interface to transmit to the terminal a signal indicating that printing is interrupted.

5. The image forming apparatus according to claim 4, wherein the processor is configured to, after transmitting the signal, perform the printing upon receipt of a signal from the terminal indicating the printing is to be resumed.

6. The image forming apparatus according to any one of claims 1 to 5, wherein the processor is configured to determine whether the specific failure is likely to occur based on a condition of the image forming apparatus.

7. The image forming apparatus according to claim 6, further comprising a sensor, wherein the processor is configured to determine the condition based on an output signal from the sensor.

8. The image forming apparatus according to any one of claims 1 to 7, wherein the processor is configured to determine that the print data includes confidential information if a predetermined image or a predetermined character string is included in the print data.

9. The image forming apparatus according to any one of claims 1 to 8, wherein the processor is further configured to determine to perform the printing based on whether a user who has issued the request for printing is an administrator.

10. A method for performing printing with an image forming apparatus, the method comprising:
receiving a request for printing and print data from a terminal; and
determining whether to perform the printing based on whether a specific failure in which printing stops before completion thereof is likely to occur and whether the print data includes confidential information.

11. The method according to claim 10, wherein printing is determined not to be performed when the specific failure is likely to occur and the print data includes confidential information.

12. The method according to claim 11, wherein printing is determined to be performed when either the specific failure is not likely to occur or the print data does not include confidential information.

13. The method according to claim 11 or 12, further comprising, after the printing is determined not to be performed, transmitting a signal to the terminal indicating that printing is interrupted.

14. The method according to any one of claims 10 to 13, wherein whether the print data includes confidential information is determined based on whether a predetermined image or a predetermined character string is included in the print data.

15. A non-transitory computer readable medium storing a program for causing a computer to perform the method according to any one of claims 10 to 14.
